# EUROPEAN PATENT APPLICATION

(11) **EP 2 535 919 A1**
(43) Date of publication of application: **19.12.2012**
(21) Application number: 12159483.2
(22) Date of filing: 14.03.2012
(51) Int. Cl.: H01J 31/12, H01J 63/06

(54) **Field emission panel, liquid crystal display and field emission display having the same**

(30) Priority: 17.06.2011 KR 20110059166
(71) Applicant: Samsung Electronics Co., Ltd., Suwon-si, Gyeonggi-do, 443-742 (KR)
(72) Inventor: Shin, Jong-Hoon, Gyeonggi-do (KR); Kim, Hun-soo, Seoul (KR); Lee, Sang-jin, Gyeonggi-do (KR); Rhee, Jong-han, Gyeonggi-do (KR); Park, Jung-hyun, Gyeonggi-do (KR)
(74) Representative: Grootscholten, Johannes A.M.

(57) **Abstract**

A field emission panel (100), a liquid crystal display (1) and a field emission display (2) having the same are provided. The field emission panel (100) includes a lower plate (120) emitting electrons and an upper plate (110) generating white light or a color image through collision with the electrons. The lower plate (120) includes plural field emission elements (170), plural cathode electrodes (160) and plural gate electrodes (180) forming an electric field for electron emission from the electron emission elements (170), and a glass plate (130) supporting the electron emission elements (170), the cathode electrodes (160), and the gate electrodes (180). The gate electrodes (180) are arranged on an upper surface (131) of the glass plate (130), and the glass plate (130) has plural accommodation grooves (132) for accommodating the plural electron emission elements (170) and the plural cathode electrodes (160).

## Description

### PRIORITY

This application claims priority under 35 U.S.C. §119(a) from Korean Patent Application No. 10-2011-0059166, filed on June 17, 2011 in the Korean Intellectual Property Office, the disclosure of which is incorporated herein by reference in its entirety.

### BACKGROUND

### 1. Technical Field

Apparatuses and methods consistent with exemplary embodiments of the present inventive concept relate to a field emission panel, a liquid crystal display and a field emission display having the same.

### 2. Description of the Related Art

A field emission material is a material that emits electrons if an electric field is formed around the material in a vacuum atmosphere. A representative example of a field emission material is a carbon nano tube (CNT). A panel that generates light using such a field emission material can be fabricated and applied to a backlight unit of a liquid crystal display (LCD) and an image implementation panel of a field emission display (FED). Hereinafter, such a type of panel will be called a "field emission panel".

The field emission panel includes an upper plate and a lower plate which are arranged in parallel to each other. A phosphor layer is provided on the upper plate, and electron emission elements formed of a filed emission material are provided on the lower plate, so that white light or a color image is generated from the phosphor layer when electrons emitted by the electron emission elements collide with the phosphor layer.

In general, the lower plate of the field emission panel includes a glass plate and an insulating layer arranged on an upper surface of the glass plate, and accommodation grooves for accommodating electron emission elements are formed on the insulating layer through an exposure and etching process. Further, the accommodation grooves generally have a pattern that is composed of plural rows and columns.

However, since conventional methods for forming the above-described accommodation grooves typically include processes for forming the insulating layer and for performing the exposure and etching, such methods are disadvantageous in fabrication time and cost. Further, because the accommodation grooves may have a pattern that is composed of plural rows and columns, the lower plate may have limitations in quantity of accommodated electron emission elements, and these limitations may cause the lifespan of the field emission panel to be shortened.

### SUMMARY OF THE INVENTION

Exemplary embodiments according to the present inventive concept have been made to address at least the above problems and/or disadvantages and to provide at least the advantages described below. Accordingly, an aspect of an exemplary embodiment provides a field emission panel, a liquid crystal display and a field emission display having the same, which can reduce the fabrication time and cost and increase the lifespan thereof.

According to one aspect of an exemplary embodiment, a field emission panel includes a lower plate emitting electrons and an upper plate generating white light or a color image through collision with the electrons, wherein the lower plate includes plural field emission elements; plural cathode electrodes and plural gate electrodes forming an electric field for electron emission from the electron emission elements; and a glass plate supporting the electron emission elements, the cathode electrodes, and the gate electrodes. The gate electrodes are arranged on an upper surface of the glass plate, and the glass plate has plural accommodation grooves for accommodating the plural electron emission elements and the plural cathode electrodes.

The plural accommodation grooves may be concavely formed from the upper surface of the glass plate.

The plural accommodation grooves may be in a stripe shape, and may be extended along a width direction of the glass plate.

The plural accommodation grooves may be arranged at equal intervals.

Each of the accommodation grooves may have a bottom surface and a pair of side surfaces neighboring the bottom surface.

The cathode electrode may be arranged on the bottom surface of the accommodation groove, and the electron emission element may be arranged on the cathode electrode.

The electron emission element may be arranged to surround the cathode electrode as a whole.

A barrier layer may be provided on a lower side of the cathode electrode to prevent oxygen ions generated from the glass plate from being delivered to the cathode electrode or the electron emission element.

The barrier layer may be made of a silicon nitride (SiNx), silicon dioxide (SiO₂), or bismuth (Bi)-based glass frit.

The barrier layer may have a thickness of 500Å or more.

The barrier layer may exist only on the bottom surface of the accommodation groove.

The barrier layer may be extended to cover at least a part of each of the side surfaces of the accommodation groove.

A charge prevention film may be provided between the cathode electrode and the barrier layer to prevent the electrons generated from the electron emission element from being charged in the barrier layer.

The charge prevention film may be made of a chromium oxide (Cr₂O₃).

The charge prevention film may have a specific resistance of 10⁵ Ω·cm or more.

The charge prevention film may have a secondary electron emission coefficient of one (1) or less on a driving condition of 300 V.

It is preferable that a thickness of the charge prevention film be equal to or larger than a thickness of the barrier layer.

The charge prevention film may exist only on the bottom surface of the accommodation groove.

The charge prevention film may be extended to cover at least a part of each of the side surfaces of the accommodation groove.

The gate electrode may have through-holes through which the electrons emitted from the electron emission elements pass.

The electron emission element may be made of carbon nano tube.

According to an aspect of another exemplary embodiment, a display apparatus including a field emission panel according to one aspect of an exemplary embodiment is provided. In particular, the display apparatus may be a liquid crystal display that the field emission panel uses as a backlight unit or a field emission display that the field emission panel uses as an image panel.

### BRIEF DESCRIPTION OF THE DRAWINGS

The above and other aspects, features and advantages of the present inventive concept will be more apparent from the following detailed description when taken in conjunction with the accompanying drawings, in which:

FIG. 1 is a schematic perspective view illustrating a field emission panel according to an exemplary embodiment;

FIG. 2 is a schematic cross-sectional view cut along line II-II as shown in FIG. 1;

FIG. 3A is an enlarged cross-sectional view illustrating an example of an area A as shown in FIG. 2;

FIG. 3B is an enlarged cross-sectional view illustrating another example of an area A as shown in FIG. 2;

FIG. 4 is a partial plan view of a second glass plate illustrated in FIG. 3A;

FIGS. 5A to 5D are views of an electron emission element illustrating respective processes for fabricating a lower plate of a field emission panel of FIG. 1;

FIG. 6 is a schematic cross-sectional view illustrating a liquid crystal display according to an exemplary embodiment; and

FIG. 7 is a schematic cross-sectional view illustrating a field emission display according to an exemplary embodiment.

### DETAILED DESCRIPTION OF EXEMPLARY EMBODIMENTS

Hereinafter, exemplary embodiments according to the present inventive concept are described in detail with reference to the accompanying drawings.

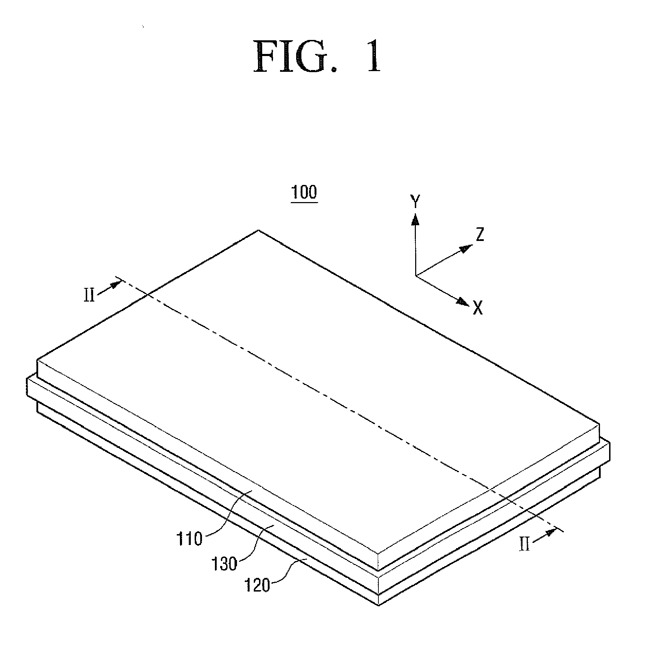

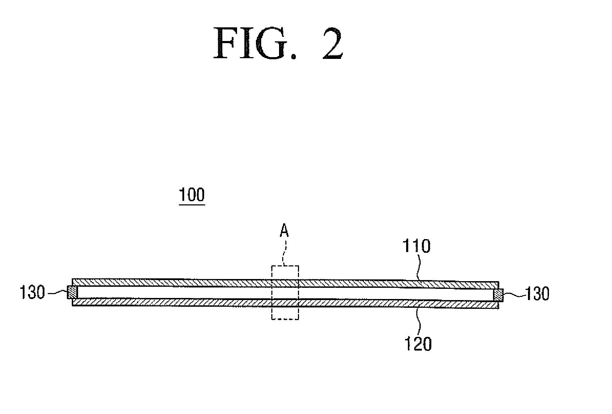

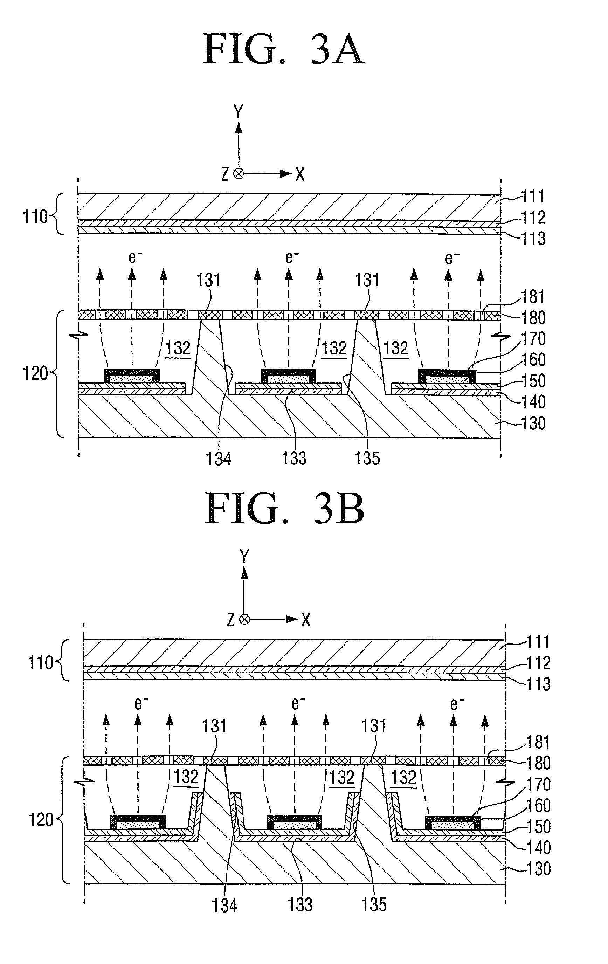

First, FIGS. 1 to 4 are referenced. FIG. 1 is a schematic perspective view illustrating a field emission panel according to an exemplary embodiment, and FIG. 2 is a schematic cross-sectional view cut along line II-II as shown in FIG. 1. FIG. 3A is an enlarged cross-sectional view illustrating an example of an area A as shown in FIG. 2, and FIG. 3B is an enlarged cross-sectional view illustrating another example of an area A as shown in FIG. 2.

A field emission panel 100 includes an upper plate 110, a lower plate 120, and a sealing member 130. The upper plate 110 and the lower plate 120 are arranged in parallel to each other, and are spaced apart from each other. The sealing member 130 is adhered to the upper plate 110 and the lower plate 120 by seal frits to seal a space between the upper plate 110 and the lower plate 120.

The upper plate 110 includes a first glass plate 111, an anode electrode 112, and a phosphor layer 113.

The first glass plate 111 is formed of a glass material which allows light transmission, and is in a rectangular plate shape. An anode electrode 112 and a phosphor layer 113 are sequentially layered on the inner surface of the first glass plate 111. The anode electrode 112 forms an electric field between the anode electrode 112 and a gate electrode 180 to be described later, and electrons that are emitted from electron emission elements 170 can be accelerated toward the upper plate 110 by the electric field. The accelerated electrons collide with the phosphor layer 113 and light (i.e., white light or a color image) is generated from the phosphor layer 113.

The lower plate 120 includes a second glass plate 130, barrier layers 140, charge prevention films 150, cathode electrodes 160, electron emission elements 170, and gate electrodes 180.

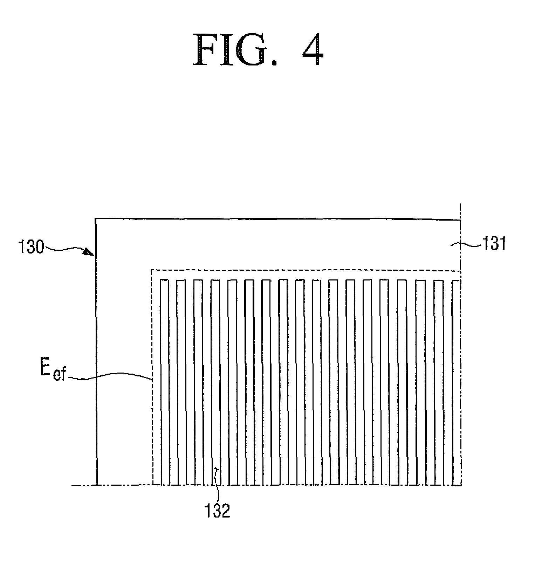

The second glass plate 130 is made of a glass material, and is in a rectangular plate shape. As illustrated in FIG. 4, the second glass plate 130 has plural accommodation grooves 132 which are arranged in an effective display area E_{ef} of the field emission panel 100. In an exemplary embodiment, accommodation grooves 132 are arranged at equal intervals in parallel to one another. Further, the accommodation grooves 132 are extended along the width direction (that is, the Z direction) of the second glass plate 130. Accordingly, the accommodation grooves 132 are in a stripe shape as seen from the Z direction.

As illustrated in FIG. 3A, each of the accommodation grooves 132 is concavely formed from the upper surface 131 of the second glass plate 130. Further, each accommodation groove has a cross section that is in an unlimited trapezoidal shape. Accordingly, the accommodation groove 132 has a bottom surface 133 that is in parallel to the upper surface 131 of the second glass plate 130, and a pair of side surfaces 134 and 135 adjacent to the bottom surface 133. The accommodation grooves 132 of the second glass plate 130 include the barrier layers 140, the charge prevention films 150, the cathode electrodes 160, the electron emission elements 170, and the gate electrodes 180.

The barrier layer 140 is accommodated in the accommodation groove 132, and is arranged on the bottom surface 133 of the accommodation groove 132. Further, the barrier layer 140 is formed to be extended along the length direction (that is, the Z direction) of the accommodation groove 132. Accordingly, as seen from the Y direction, the barrier layer 140 is in a stripe shape.

In exemplary embodiments, the barrier layer 140 may be made of a silicon nitride (SiNx), silicon dioxide (SiO₂), or bismuth (Bi)-based glass frit material, and may be formed by a process such as deposition (for example, sputtering) or screen printing. In some exemplary embodiments, the barrier layer 140 may have a thickness of 500Å or more. The barrier layer 140 protects the cathode electrodes 160 and the electron emission elements 170 from oxygen ions O²⁻ that are generated on the second glass plate 130 when the gate electrodes 180 are adhered to the upper surface 131 of the second glass plate 130 by anodic bonding.

The charge prevention film 150 is accommodated in the accommodation groove 132 of the second glass plate 130, and is formed on the barrier layer 140. In the same manner as the barrier layer 140, the charge prevention film 150 is formed to be extended along the length direction of the accommodation groove 132 (that is, the Z direction), and thus the charge prevention film 150 is in a stripe shape as seen from the Y direction.

In exemplary embodiments, charge prevention film 150 may be made of a chromium oxide (Cr₂O₃) material, and may be formed by a process such as, for example, deposition or screen printing. The charge prevention film 150 performs a function of preventing the electrons emitted from the electron emission elements 170 from being charged in the lower barrier layer 140. In some exemplary embodiments, the charge prevention film 150 may have a resistivity value of 10⁵ Ω·cm or more. Since the electrons are prevented from being charged in the barrier layer 140 by the charge prevention film 150, arcing is prevented from occurring between the barrier layer 140 and the side surfaces 134 and 135 of the accommodation groove 132. In some exemplary embodiments, the thickness of the charge prevention film 150 is equal to or larger than the thickness of the barrier layer 140. In some exemplary embodiments, the charge prevention film may have a secondary electron emission coefficient of one (1) or less on a driving condition of 300V.

The barrier layer 140 and the charge prevention film 150 may exist only on the bottom surface 133 of the accommodation groove 132 as illustrated in FIG. 3A, or may be extended up to the side surfaces 134 and 135 of the accommodation groove 132 to cover the bottom surface 133 of the accommodation groove 132 and at least a part of the side surfaces 134 and 135 of the accommodation groove 132.

The cathode electrode 160 is accommodated in the accommodation groove 132 of the second glass plate 130, and is arranged on the charge prevention film 150. In the same manner as the barrier layer 140 and the charge prevention film 150, the cathode electrode 160 is formed to be extended along the length direction of the accommodation groove 132 (that is, Z direction), and thus the cathode electrode 160 is in a stripe shape as seen from the Y direction.

The cathode electrode 160 forms an electric field for the electron emission from the electron emission elements 170 between the cathode electrode 160 and the gate electrode 180. In exemplary embodiments, the cathode electrode 160 may be made of a silver (Ag) or aluminum (Al) material that has a relatively low resistance. Further, the cathode electrode 160 may be formed by a process such as, for example, deposition or screen printing, and in some embodiments, the cathode electrode 160 may have a thickness of 3000Å or more. As illustrated in FIG. 3A, in some exemplary embodiments, the width of the cathode electrode 160 is designed to be smaller than the widths of the barrier layer 140 and the charge prevention film 150.

The electron emission element 170 is accommodated in the accommodation groove 132 of the second glass plate 130, and is arranged on the cathode electrode 160 to surround the cathode electrode 160 as a whole. Since the electron emission element 170 surrounds the cathode electrode 160, the cathode electrode 160 is not exposed to the outside, and thus the arcing is prevented from occurring between the cathode electrode 160 and the side surfaces 134 and 135 of the accommodation groove 132.

The electron emission element 170 is formed to be extended along the length direction of the accommodation groove 132 (that is, the Z direction), and thus the electron emission element 170 is in a stripe shape as seen from the Y direction. Since the electron emission element 170 having the stripe shape is extended over the whole length of the accommodation groove 132, the quantity of accommodated electron emission elements per unit area of the field emission panel 100 can be increased. Accordingly, the field emission panel 100 generally has a longer lifespan than general field emission panels adopting electron emission elements having other shapes (such as, for example, a dot shape).

The electron emission element 170 is formed of a material that emits electrons when an electric field is formed around the electron emission element 170, that is, a field emission material. In this exemplary embodiment, the electron emission element 170 is formed of a carbon nano tube (CNT) material, and in other alternative exemplary embodiments, the electron emission element 170 may be formed of another field emission material, such as, for example, graphite, graphite nano fiber, diamond, diamond-like carbon (DLC), fullerene, or silicon nano-fiber. The electron emission element 170 may be formed by a process such as, for example, deposition or screen printing, and as illustrated in FIG. 3A, in some exemplary embodiments, the width of the electron emission element 170 is designed to be smaller than the widths of the barrier layer 140 and the charge prevention film 150.

Electrons are emitted from the electron emission element 170 by the electric field that is formed between the gate electrode 180 and the cathode electrode 160, and the emitted electrons are accelerated toward the upper plate 110 by the electric field that is formed between the anode electrode 112 and the gate electrode 180.

The gate electrode 180 is supported on the upper surface 131 of the second glass plate 130. The gate electrode 180 has a rectangular stripe shape. Further, the gate electrode 180 is extended along the direction (that is, the X direction) that is perpendicular to the length direction of the accommodation groove 132 (that is, the Z direction). Plural through-holes 181 are formed on the gate electrode 180, and the electrons emitted from the electron emission element 170 pass the accommodation groove 132 through the through-holes 181.

In some exemplary embodiments, the gate electrode 180 may be formed of a material having small resistance, such as, for example, silver (Ag) or aluminum (Al), and in this embodiment, the gate electrode 180 is formed of aluminum (Al). As described above, the gate electrode 180 forms the electric field for the electron emission together with the cathode electrode 160, and forms the electric field for accelerating the emitted electrons together with the anode electrode 112. In some exemplary embodiments, the gate electrode 180 may be adhered to the upper surface 131 of the second glass plate 130 by an adhesive material (for example, paste) or by anodic bonding.

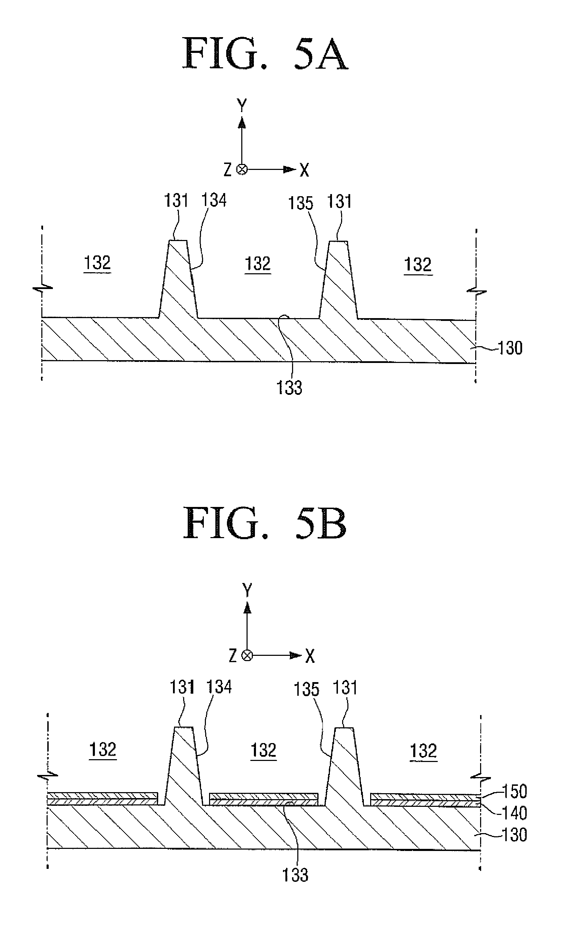

Next, FIGS. 5A to 5D are referenced. FIGS. 5A to 5D are views sequentially illustrating respective processes for fabricating the lower plate of the field emission panel of FIG. 1.

First, as illustrated in FIG. 5A, plural accommodation grooves 132 are formed on the second glass plate 130 of the lower plate 120. As described above, in exemplary embodiments, the plural accommodation grooves 132 are arranged at equal intervals, and are in a stripe shape that are extended along the width direction of the second glass plate 130 (that is, the Z direction). Further, each of the accommodation grooves 132 has one bottom surface 133 and a pair of side surfaces 134 and 135 adjacent to the bottom surface 133. In some exemplary embodiments, the accommodation grooves 132 may be formed, for example, by glass etching.

In comparison to the field emission panel in the related art, in which the insulating layer is formed on the second glass plate as a whole and the accommodation grooves are formed by exposing and etching the insulating layer, the field emission panel 100 according to this exemplary embodiment according to the present inventive concept, in which the accommodation grooves 132 are formed by directly etching the second glass plate 130, can reduce the numbers and cost of the fabricating processes.

Next, as illustrated in FIG. 5B, the barrier layers 140 and the charge prevention films 150 are sequentially formed on the bottom surfaces 133 of the respective accommodation grooves 132 of the second glass plate 130. As described above, the barrier layers 140 and the charge prevention films 150 are in a stripe shape that is extended along the length direction of the accommodation grooves 132 (that is, the Z direction). In exemplary embodiments, the barrier layers 140 are made of a silicon nitride (SiNx), silicon dioxide (SiO₂), or bismuth (Bi)-based glass frit material, and the charge prevention films 150 are made of a chromium oxide (Cr₂O₃) material. Further, in some exemplary embodiments, the barrier layers 140 are formed with a thickness of 500Å or more, and the charge prevention films 150 are formed with a thickness that is equal to or larger than the thickness of the barrier layer 140.

In exemplary embodiments, the barrier layers 140 and the charge prevention films 150 may be formed, for example, by deposition (for example, sputtering) or screen printing. The screen printing process has a disadvantage in that gas may be generated in a process of firing paste, but also has an advantage in that its fabricating cost is reduced in comparison to the sputtering process.

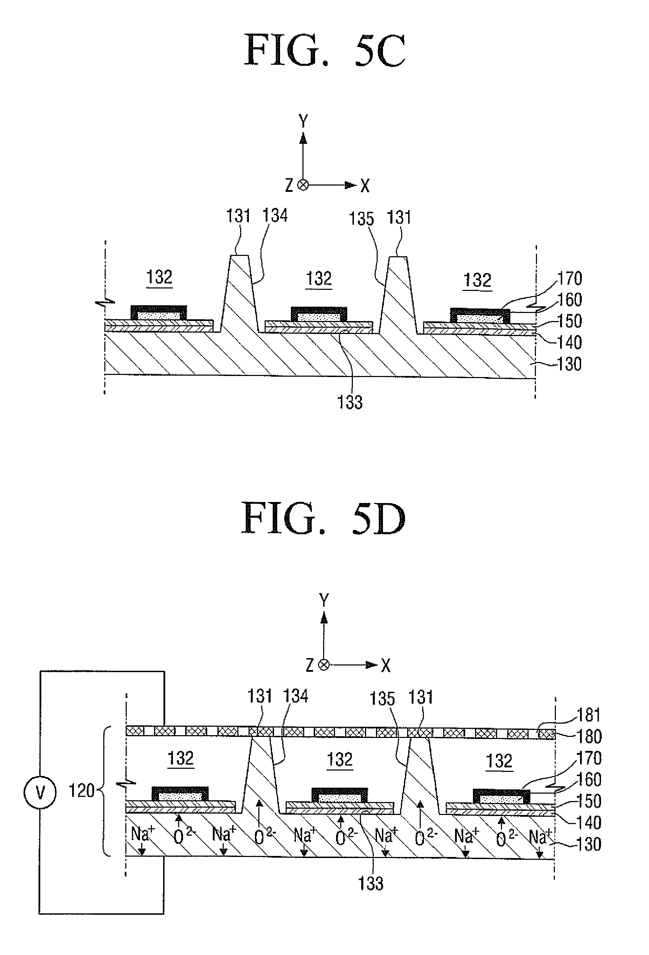

Next, as illustrated in FIG. 5C, the cathode electrodes 160 and the electron emission elements 170 are sequentially formed on the charge prevention films 150. As described above, the cathode electrodes 160 and the electron emission elements 170 are in a stripe shape that is extended along the length direction of the accommodation grooves 132 (that is, the Z direction). Further, since the electron emission elements 170 are formed to completely surround the cathode electrodes 160, arcing is prevented from occurring through the cathode electrodes 160. In exemplary embodiments, the cathode electrodes 160 may be formed of a silver (Ag) or aluminum (Al) material, and the electron emission elements 170 may be formed of a carbon nano tube (CNT) material.

In exemplary embodiments, the cathode electrodes 160 may be formed by a deposition process or by a screen printing process. In some exemplary embodiments, the cathode electrodes 160 may have a thickness of 3000Å or more. Further, in some exemplary embodiments, the electron emission elements 170 may be formed by the screen printing process.

Last, as illustrated in FIG. 5D, the gate electrodes 180 are adhered to the second glass plate 130. The plural through-holes 181 have already been formed on the gate electrodes 180. In some exemplary embodiments, the gate electrodes 180 are made of an aluminum (Al) material, and may be adhered to the second glass plate 130 by adhesives or by anodic bonding. In this exemplary embodiment, the gate electrodes 180 are adhered to the second glass plate 130 by the anodic bonding.

Presently, the anodic bonding method will be described. As illustrated in FIG. 5D, the gate electrodes 180 are positioned on the second glass plate 130, and a voltage for the anodic bonding is applied between the gate electrodes 180 and the second glass plate 130. Then, sodium oxide (Na₂O) that is contained in the second glass plate 130 is separated into O²⁻ ions and Na⁺ ions. The Na⁺ ions move toward the bottom surface of the second glass plate 130, and the O²⁻ ions move toward the gate electrodes 180. As a result, on the gate electrodes 180, oxygen ions O²⁻ and aluminum ions Al³⁺ are bonded together to produce aluminum oxide (Al₂O₃), and by a bonding action of the aluminum oxide, the gate electrodes 70 may be bonded onto the upper surface 131 of the second glass plate 130. The above-described barrier layer 140 prevents the cathode electrode 160 or the electron emission element 170 from being oxidized by the oxygen ions that move toward the gate electrode 180.

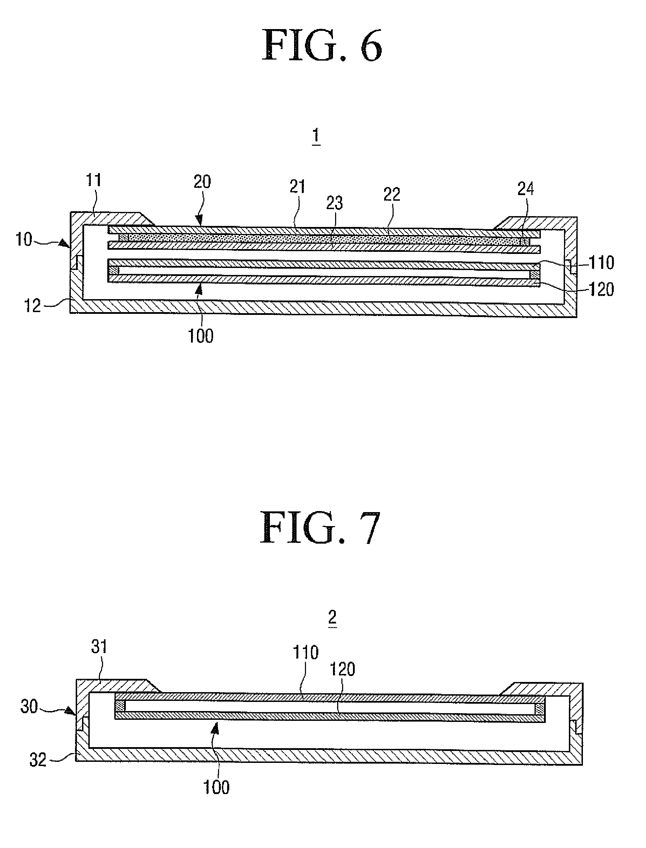

Next, FIG. 6 is referenced. FIG. 6 is a schematic cross-sectional view illustrating a liquid crystal display according to an exemplary embodiment according to the present inventive concept.

A liquid crystal display 1 includes a housing 10, a liquid crystal panel 20, and a field emission panel 100 according to the above-described exemplary embodiments.

The housing 10 accommodates internal components of the display 1 that include the liquid crystal panel 20 and the field emission panel 100. The housing 10 includes a front housing 11 and a rear housing 12.

The liquid crystal panel 20 includes a color filter substrate 21 on which a color filter layer (not illustrated) is formed and a thin film transistor substrate 23 on which thin film transistors are formed, and a liquid crystal layer 22 fills in the space between the two substrates 21 and 23. Further, the color filter substrate 21 and the thin film transistor substrate 23 are sealed together by sealant 24.

The field emission panel 100 is arranged on the rear surface of the liquid crystal panel 20, and generates and irradiates white light toward the liquid crystal panel 20. In particular, the field emission panel 100 is used as a backlight unit. The white light that is irradiated toward the liquid crystal panel 20 passes through the liquid crystal layer 22 with its transmission rate adjusted, and then is converted into a color image by the color filter substrate 21.

Lastly, FIG. 7 is referenced. FIG. 7 is a schematic cross-sectional view illustrating a field emission display according to an exemplary embodiment according to the present inventive concept.

A field emission display 2 includes a housing 30 and a field emission panel 100 according to the above-described embodiments.

The housing 30 accommodates internal components of the display 2 that include the field emission panel 100. The housing includes a front housing 31 and a rear housing 32.

The field emission panel 100 is used as a display panel that implements a color image without help of the backlight unit. Accordingly, the phosphor layer that is formed on the upper plate 110 of the field emission panel 100 includes a large number of phosphors that are arranged in a pattern that corresponds to a pattern of pixels so as to implement the color image.

While exemplary embodiments according to the present inventive concept have been shown and described, it will be understood by those skilled in the art that various changes in form and detail may be made therein without departing from the spirit and scope of the invention, as defined by the appended claims. The exemplary embodiments should be considered in a descriptive sense only and not for purposes of limitation. Therefore, the scope of the present inventive concept is defined not by the detailed description of the exemplary embodiments, but by the appended claims, and all differences within the scope will be construed as being included in the present disclosure.

## Claims

1. A field emission panel including a lower plate emitting electrons and an upper plate generating white light or a color image through collision with the electrons;
wherein the lower plate comprises:
plural electron emission elements;
plural cathode electrodes and plural gate electrodes forming an electric field for electron emission from the electron emission elements; and
a glass plate supporting the electron emission elements, the cathode electrodes, and the gate electrodes;
wherein the gate electrodes are arranged on an upper surface of the glass plate, and the glass plate has plural accommodation grooves for accommodating the plural electron emission elements and the plural cathode electrodes.

2. The field emission panel as claimed in claim 1, wherein the plural accommodation grooves are concavely formed from the upper surface of the glass plate.

3. The field emission panel as claimed in claim 1, wherein the plural accommodation grooves are in a stripe shape, and are extended along a width direction of the glass plate.

4. The field emission panel as claimed in claim 1, wherein each of the accommodation grooves has a bottom surface and a pair of side surfaces neighboring the bottom surface.

5. The field emission panel as claimed in claim 4, wherein each respective cathode electrode is arranged on the bottom surface of the corresponding accommodation groove, and each respective electron emission element is arranged on the corresponding cathode electrode.

6. The field emission panel as claimed in claim 5, wherein each respective electron emission element is arranged to surround the corresponding cathode electrode as a whole.

7. The field emission panel as claimed in claim 5, wherein a barrier layer is provided on a lower side of each respective cathode electrode to prevent oxygen ions generated from the glass plate from being delivered to the respective cathode electrode or the corresponding electron emission element.

8. The field emission panel as claimed in claim 7, wherein each respective barrier layer is made of a silicon nitride (SiNx), silicon dioxide (SiO₂), or bismuth (Bi)-based glass frit.

9. The field emission panel as claimed in claim 7, wherein each respective barrier layer has a thickness of 500Å or more.

10. The field emission panel as claimed in claim 7, wherein a charge prevention film is provided between each respective cathode electrode and the corresponding barrier layer to prevent the electrons generated from the corresponding electron emission element from being charged in the corresponding barrier layer.

11. The field emission panel as claimed in claim 10, wherein each respective charge prevention film is made of a chromium oxide (Cr₂O₃).

12. The field emission panel as claimed in claim 10, wherein each respective charge prevention film has a specific resistance of 10⁵Ωcm or more.

13. The field emission panel as claimed in claim 1, wherein the gate electrodes have through-holes through which the electrons emitted from the electron emission elements pass.

14. The field emission panel as claimed in claim 1, wherein each respective electron emission element is made of a carbon nano tube.

15. A display apparatus including a field emission panel according to claims 1 to 14.
